# EUROPÄISCHE PATENTSCHRIFT

(11) **EP 4 392 690 B1**
(45) Veröffentlichungstag und Bekanntmachung des Hinweises auf die Patenterteilung: **02.07.2025**
(21) Anmeldenummer: 22760996.3
(22) Anmeldetag: 08.08.2022
(51) Int. Cl.: F16H 1/12, F16H 57/022, F16H 55/17

(54) **KRONENRADGETRIEBE**
CROWN WHEEL GEAR
ROUE DENTÉE

(30) Priorität: 25.08.2021 DE 202021104559 U
(43) Veröffentlichungstag der Anmeldung: 03.07.2024
(73) Patentinhaber: LEWA GmbH, 71229 Leonberg (DE)
(72) Erfinder: KRIEG, Harald, 73433 Aalen (DE)
(74) Vertreter: Zeitler Volpert Kandlbinder Patentanwälte Partnerschaft mbB
(86) Internationale Anmeldenummer: PCT/EP2022/072187
(87) Internationale Veröffentlichungsnummer: WO 2023/025579

(56) Entgegenhaltungen:
- WO-A1-2013/067565
- US-A1- 2020 200 251

## Beschreibung

Die Erfindung betrifft ein Kronenradgetriebe, gemäß dem Oberbegriff des Patentanspruchs 1.

Das Kronenradgetriebe ist ein Getriebe, bei dem ein Ritzel mit einem Kronenrad zusammenwirkt. Dabei kann das Ritzel, ohne Einfluss auf das Zahnspiel, in axialer Richtung des Ritzels frei über die Kronenradverzahnung bewegt werden. Der Verzahnungseingriff zwischen dem Ritzel und dem Kronenrad ist so auszulegen, dass das Ritzel und das Kronenrad optimal ineinandergreifen. Dabei muss ein definiertes für den Lauf erforderliches und günstiges Flankenspiel zwischen den Zähnen von Ritzel und Kronenrad sichergestellt sein. Aufgrund von unvermeidbaren Abweichungen bei der Herstellung, ist zwischen den Flanken der Zähne herstellungsbedingt kein konstantes Spiel vorhanden. Um ein Klemmen der Zähne zu vermeiden ist ein gewisses Flankenspiel notwendig. Prinzipiell unterscheidet man bei den Flankenspielen zwischen dem Normalflankenspiel, dem Radialspiel und dem Verdrehflankenspiel.

Kronenradgetriebe können integraler Bestandteil von Kurbeltrieben für oszillierende Verdrängerpumpen sein. Die Kronenradwelle kann entweder als Exzenterwelle ausgebildet sein oder mit einem Exzenter verbunden sein. Über ein mit dem Exzenter im Eingriff stehendes Pleuel wird die Drehbewegung in eine oszillierende Bewegung umgewandelt.

Für Kronenradgetriebe ist es, je nach Fertigungstoleranzen, insbesondere erforderlich, das sogenannte Verdrehflankenspiel im Verzahnungseingriff zwischen dem Ritzel und dem Kronenrad einzustellen. Dabei ist das Verdrehflankenspiel das auf den Wälzkreis bezogene Spiel. Das Verdrehflankenspiel ist die Länge des Wälzkreisbogens, um den sich das Ritzel und das Kronenrad relativ zueinander verdrehen lassen. Dabei wird das Verdrehflankenspiel von der Dicke, dem Abstand und der Form der einzelnen Zähne auf Ritzel und Kronenrad und dem relativen Abstand von Ritzel und Kronenrad zueinander beeinflusst.

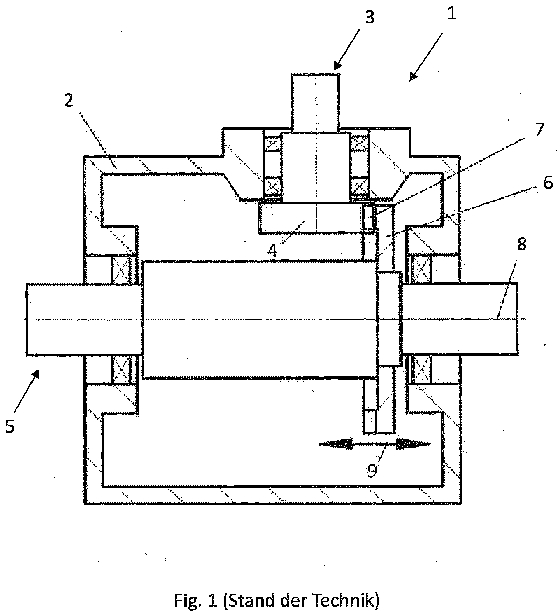

Fig. 1 zeigt ein Kronenradgetriebe 1 nach dem Stand der Technik. Das Kronenradgetriebe 1 weist ein Gehäuse 2, eine drehbar relativ zu dem Gehäuse 2 gelagerte Ritzelwelle 3, ein mit der Ritzelwelle 3 verbundenes Ritzel 4, eine drehbar relativ zu dem Gehäuse 2 gelagerte Kronenradwelle 5 und ein mit der Kronenradwelle 5 verbundenes Kronenrad 6 auf. Dabei stehen das Ritzel 4 und das Kronenrad 6 miteinander im Verzahnungseingriff 7. Die Ritzelwelle 3 und das Ritzel 4 sind drehbar aber ortsfest relativ zu dem Gehäuse 2 gelagert. Ebenso ist die Kronenradwelle 5 drehbar aber ortsfest relativ zu dem Gehäuse 2 gelagert. Um das Verdrehflankenspiel zwischen dem Kronenrad 6 und dem Ritzel 4 einzustellen, wird lediglich das Kronenrad 6 in Richtung der Kronenradwellenachse 8 verschoben. Die mögliche Verschiebung ist mittels der Pfeile 9 dargestellt. Dabei erfordert die Einstellung des Verdrehflankenspiels einen hohen Montageaufwand, wenn zu der Einstellung Passscheiben zwischen Kronenradwelle 5 und Kronenrad 6 verwendet werden. Weiter erfordert die Realisierung einer axial in Richtung der Kronenradwellenachse 8 verschiebbaren Wellen-Naben-Verbindung zwischen dem Kronenrad 6 und der Kronenradwelle 5 einen hohen konstruktiven Aufwand.

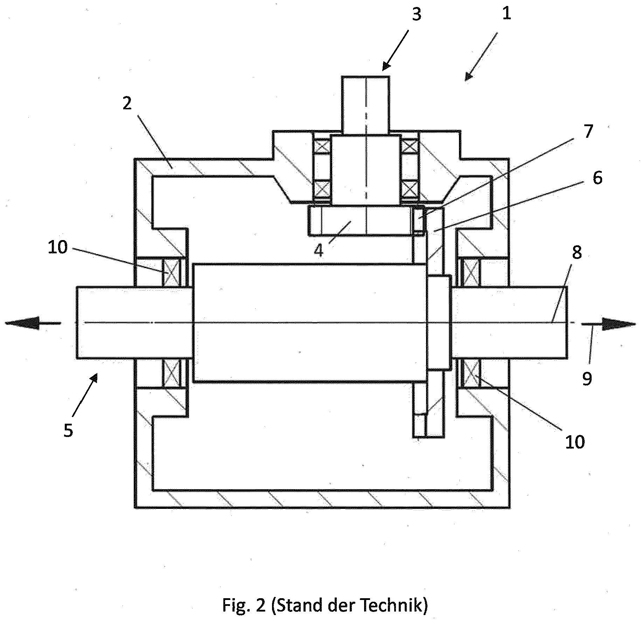

Fig. 2 zeigt ein weiteres Kronenradgetriebe 1 nach dem Stand der Technik. Bei dem Kronenradgetriebe der Fig. 2 wird das Kronenrad 6, die Kronenradwelle 5 und die Lagerung 10 der Kronenradwelle 5 verschoben, um das Verdrehflankenspiel zwischen dem Kronenrad 6 und dem Ritzel 4 einzustellen. Es ergibt sich ein hoher konstruktiver Aufwand. Es ist zu beachten, dass die Kronenradwelle 5 relativ zu dem Gehäuse 2 verschoben wird. Dies kann ungünstig sein, da die Führung von Pleuel und/oder beispielsweise Dichtstellen auf diese Verschiebung auszulegen sind.

Die Druckschrift WO 2013/067565 A1 betrifft ein Getriebe für ein muskelkraftbetriebenes Fahrzeug mit Hilfsmotor, insbesondere Pedelec, mit einem am Fahrzeug montierbaren Gehäuse und darin gelagert einer ersten Antriebswelle zum Einspeisen von Muskelkraft, welche auf eine etwa koaxiale Abtriebswelle zum Antreiben des Fahrzeugs wirkt, und etwa in rechtem Winkel dazu einer zweiten Antriebswelle zum Anschließen des Hilfsmotors, die über ein Winkelgetriebe ebenfalls auf die Abtriebswelle wirkt, wobei die Abtriebswelle eine Hohlwelle ist, die von der ersten Antriebswelle durchsetzt und mit dieser über einen ersten Freilauf gekuppelt ist. Die zweite Antriebswelle weist ein Ritzel und die Abtriebswelle weist ein Kronenrad auf, die zusammen ein Winkelgetriebe in Form eines Kronenradgetriebes ausbilden. Für die Einstellung des Spiels zwischen Ritzel und Kronenrad erfolgt eine einachsige Bewegung, z.B. des Kronenrads 21 in seiner Axialrichtung.

Die Druckschrift US 2020/0200251 A1 beschreibt einen Stellantrieb für ein Bauteil eines Landkraftfahrzeugs mit einem Stellgliedgehäuse, das ein Innenvolumen abgrenzt in dem mindestens ein Elektromotor und ein internes mechanisches Getriebe angeordnet ist. Das mechanische Getriebe weist mindestens ein erstes Zahnrad auf, das eine Drehachse aufweist, wobei die Drehachse senkrecht zur Drehachse der Antriebswelle der betätigten Welle steht. Das erste Zahnrad weist eine Axialverzahnung auf, die aus einer Verzahnung ausgebildet ist, die eine Erstreckung von unten nach oben in Richtung der Drehachse des ersten Zahnrads aufweist und die mit dem Abtriebsritzel des Elektromotors kämmt.

Der Erfindung liegt die Aufgabe zugrunde, ein verbessertes Kronenradgetriebe bereitzustellen.

Diese Aufgabe wird durch ein Kronenradgetriebe der o.g. Art mit den in Patentanspruch 1 gekennzeichneten Merkmalen gelöst. Vorteilhafte Ausgestaltungen des erfindungsgemäßen Kronenradgetriebes sind Gegenstand der abhängigen Patentansprüche und ergeben sich aus der nachfolgenden Beschreibung der Erfindung.

Demgemäß wird ein erfindungsgemäßes Kronenradgetriebe bereitgestellt. Das Kronenradgetriebe weist ein Gehäuse, eine drehbar relativ zu dem Gehäuse gelagerte Ritzelwelle, ein mit der Ritzelwelle verbundenes Ritzel, eine drehbar relativ zu dem Gehäuse gelagerte Kronenradwelle und ein mit der Kronenradwelle verbundenes Kronenrad auf. Dabei stehen das Ritzel und das Kronenrad miteinander im Verzahnungseingriff. Weiter sind das Kronenrad und die Kronenradwelle relativ zu dem Gehäuse drehbar aber ortsfest angeordnet und das Ritzel ist relativ zu dem Kronenrad verschiebbar, um ein Verdrehflankenspiel zwischen dem Kronenrad und dem Ritzel einzustellen. Die Ritzelwelle ist in einem Flansch drehbar gelagert ist und der Flansch ist verschiebbar zu dem Gehäuse angeordnet. Zwischen dem Gehäuse und dem Flansch ist zumindest eine parallel zur Kronenradwellenachse angeordnete Längspassung angeordnet, um die Ritzelwelle auszurichten.

Dadurch, dass das Ritzel relativ zu dem Kronenrad verschiebbar ist, kann trotz ortsfestem Kronenrad das Verdrehflankenspiel zwischen dem Kronenrad und dem Ritzel eingestellt werden. Das relativ zu dem Gehäuse ortsfest angeordnete Kronenrad hat den Vorteil, dass die Montage von Kronenrad und Kronenradwelle einfach ist. Zudem kann der strukturelle Aufbau von Kronenrad und Kronenradwelle einfach sein. Eine Verschiebung von weiteren Elementen wie Pleuel oder Dichtstellen ist nicht nötig und braucht bei der Konstruktion nicht berücksichtigt zu werden. Ebenso ist es nicht erforderlich eine Lagerung der Kronenradwelle zu verschieben.

Dass die Ritzelwelle relativ zu dem Gehäuse drehbar gelagert ist, bedeutet, dass sich die Ritzelwelle um ihre Ritzelwellenachse drehen kann, aber direkt oder indirekt mittels des Gehäuses gelagert ist. Insbesondere ist die Ritzelwelle über ein zwischen der Ritzelwelle und dem Gehäuse angeordneten Lager gelagert. Dadurch, dass das Ritzel mit der Ritzelwelle verbunden ist, kann sich das Ritzel ebenfalls relativ zu dem Gehäuse um die Ritzelwellenachse drehen.

Dass die Kronenradwelle relativ zu dem Gehäuse gelagert ist, bedeutet, dass sich die Kronenradwelle um ihre Kronenradwellenachse drehen kann, aber direkt oder indirekt mittels des Gehäuses gelagert ist. Insbesondere ist die Kronenradwelle über ein zwischen der Kronenradwelle und dem Gehäuse angeordneten Lager gelagert.

Dadurch, dass das Kronenrad mit der Kronenradwelle verbunden ist, kann sich das Kronenrad ebenfalls relativ zu dem Gehäuse um die Kronenradwellenachse drehen. Unter dem Verzahnungseingriff ist das Ineinandergreifen der Zähne des Ritzels und der Zähne des Kronenrads zu verstehen. Das Verdrehflankenspiel kann, wie zuvor beschrieben, über den Abstand von dem Ritzel zu dem Kronenrad beeinflusst werden. Daher kann das Verdrehflankenspiel über die Verschiebung des Ritzels relativ zu dem Kronenrad eingestellt werden.

Die Kronenradwelle weist eine Kronenradwellenachse auf. Weiter ist das Ritzel parallel zu der Kronenradwellenachse verschiebbar. Vorteilhafterweise kann dann auch nach der Verschiebung des Ritzels ein guter Verzahnungseingriff erreicht werden, d.h. man erreicht eine große Fläche mit der sich die Zähne von Ritzel und Kronenrad überlagern.

Gemäß einer weiteren Ausführungsform des Kronenradgetriebes weist die Ritzelwelle eine Ritzelwellenachse auf. Weiter sind die Ritzelwelle und die Kronenradwelle derart mittels des Gehäuses gelagert, dass die Ritzelwellenachse senkrecht zu der Kronenradwellenachse angeordnet ist. Durch die Anordnung mit senkrechten Achsen kann ebenfalls ein guter Verzahnungseingriff erreicht werden, d.h. man erreicht eine große Fläche mit der sich die Zähne von Ritzel und Kronenrad überlagern.

Beispielsweise ist die Ritzelwelle mittels einer Wälzlagerung oder mittels einer Gleitlagerung in dem Flansch gelagert. Der Flansch ist lösbar mit dem Gehäuse verbunden. Der gelöste Flansch kann relativ zu dem Gehäuse verschoben werden. Der in die gewünschte Position relativ zu dem Gehäuse verschobene Flansch kann nach dem Verschieben wieder lösbar befestigt werden. Der Flansch ist prinzipiell austauschbar. So kann ein passender Flansch für eine erste Grobjustierung des Ritzels relativ zu dem Kronenrad gewählt werden. Die Feinjustage kann dann durch die Verschiebung des Flanschs erreicht werden.

Gemäß einer weiteren Ausführungsform des Kronenradgetriebes ist der Flansch mittels Druckschrauben und/oder Zugschrauben mit dem Gehäuse verbindbar. Die lösbare Verbindung des Flanschs mit dem Gehäuse kann mittels Zugschrauben und mittels Druckschrauben erreicht werden. Dabei stützen sich die Druckschrauben oder Zugschrauben direkt oder indirekt am Gehäuse ab.

Bei den Zugschrauben kann die Zugschraube im Flansch, d.h. im kopfnahen Bereich der Schraube frei gleiten. Bei Schrauben mit durchgehendem Gewinde wird ein Gleitloch im Flansch gebohrt, das zumindest dem Außendurchmesser der Schraube entspricht. Schrauben, welche einen glatten Bereich im kopfnahen Bereich haben, gleiten automatisch im Flansch.

Die Druckschrauben können bei einem Gehäuse mit Hinterschnitt eingesetzt werden, in welchen der Flansch eingreift. Ein drehen der Druckschraube im Flansch bewirkt dann einen Druck der Druckschraube von außen auf das Gehäuse, so dass der Flansch mit dem Teil, welcher sich im Hinterschnitt befindet, und mit der Druckschraube das Gehäuse einklemmt. Dadurch ist der Flansch an dem Gehäuse lösbar befestigt.

Gemäß einer weiteren Ausführungsform des Kronenradgetriebes sind ein Auflagebereich des Flanschs und ein Auflagebereich des Gehäuses so ausgebildet, dass der Flansch und das Gehäuse über eine kraftschlüssige Verbindung verbindbar sind. Dadurch, dass die kraftschlüssige Verbindung lösbar ist, kann der Flansch mit der Ritzelwelle und dem Ritzel nachjustiert werden und nach der Nachjustage wieder befestigt werden.

Gemäß einer weiteren Ausführungsform des Kronenradgetriebes sind ein Auflagebereich des Flanschs und ein Auflagebereich des Gehäuses so ausgebildet, dass der Flansch und das Gehäuse über eine teilweise formschlüssige Verbindung verbindbar sind. Vorteilhafterweise ist auch die teilweise formschlüssige Verbindung lösbar.

Gemäß einer weiteren Ausführungsform des Kronenradgetriebes weist der Auflagebereich des Flanschs und/oder der Auflagebereich des Gehäuses eine Zackenform oder eine Wellenform auf. Wenn der Auflagebereich des Flanschs und der Auflagebereich des Gehäuses eine zueinander passende Zackenform oder Wellenform aufweisen, dann können der Auflagebereich des Flanschs und der Auflagebereich des Gehäuses ineinandergreifen. Dementsprechend wird eine teilweise formschlüssige Verbindung zwischen dem Auflagebereich des Flanschs und dem Auflagebereich des Gehäuses ausgebildet.

Mittels der Längspassung kann die Ritzelwelle justiert werden. Dadurch kann die Rizelwellenachse relativ zur Kronenradwellenachse ausgerichtet werden.

Gemäß einer weiteren Ausführungsform des Kronenradgetriebes weist die Längspassung eine Nut in dem Gehäuse, eine Nut in dem Flansch und eine in beiden Nuten angeordnete Passfeder auf. Mittels der beiden Nuten und der Passfeder kann die Längspassung einfach ausgebildet sein.

Weitere mögliche Implementierungen der Erfindung umfassen auch nicht explizit genannte Kombinationen von zuvor oder im Folgenden beschriebenen Merkmalen. Dabei können auch Einzelaspekte als Verbesserungen oder Ergänzungen zu der jeweiligen Grundform der Erfindung hinzugefügt werden.

Die Erfindung wird im Folgenden anhand der Zeichnungen näher erläutert. Diese zeigen in
Fig. 1 eine schematische Schnittansicht eines Kronenradgetriebes nach dem Stand der Technik,
Fig. 2 eine schematische Schnittansicht eines weiteren Kronenradgetriebes nach dem Stand der Technik,
Fig. 3 eine schematische Schnittansicht eines erfindungsgemäßen Kronenradgetriebes,
Fig. 4 eine schematische Schnittansicht entlang der Linie IV - IV aus Fig. 3,
Fig. 5 eine vergrößerte Ansicht des Bereichs V aus Fig. 3, und
Fig. 6 eine weitere alternative vergrößerte Ansicht des Bereichs V aus Fig. 3.

In den Figuren sind gleiche oder funktionsgleiche Elemente mit denselben Bezugszeichen versehen worden. Ferner sollte beachtet werden, dass die Darstellungen in den Figuren nicht notwendigerweise maßstabsgerecht sind. In den Fig. 1 bis 4, welche eine Schnittansicht zeigen, ist die einen Schnitt symbolisierende Schraffur teilweise weggelassen.

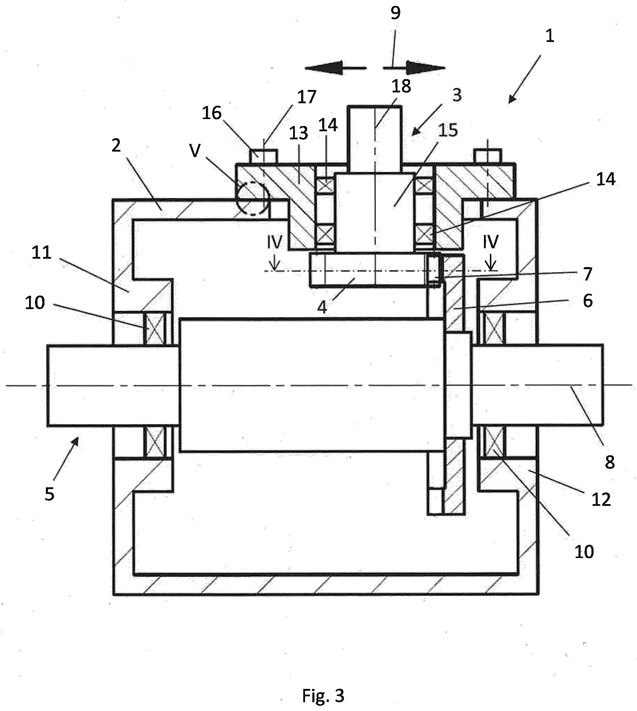

Fig. 3 zeigt eine schematische Schnittansicht eines erfindungsgemäßen Kronenradgetriebes 1. Das Kronenradgetriebe 1 weist ein Gehäuse 2, eine drehbar relativ zu dem Gehäuse 2 gelagerte Ritzelwelle 3, ein mit der Ritzelwelle 3 verbundenes Ritzel 4, eine drehbar relativ zu dem Gehäuse 2 gelagerte Kronenradwelle 5 und ein mit der Kronenradwelle 5 verbundenes Kronenrad 6 auf. Dabei stehen das Ritzel 4 und das Kronenrad 6 miteinander im Verzahnungseingriff 7, d.h. die Zähne des Ritzels 4 und die Zähne des Kronenrads 6 greifen ineinander.

Das Kronenrad 6 und die Kronenradwelle 5 sind relativ zu dem Gehäuse 2 drehbar aber ortsfest angeordnet. Demzufolge verändert weder das Kronenrad 6 noch die Kronenradwelle 5 bei einer Drehung um die Kronenradwellenachse 8 die räumliche Position relativ zu dem Gehäuse 2. Das Kronenrad 6 und die Kronenradwelle 5 verändern ihre Position relativ zu dem Gehäuse 2 weder in radialer Richtung zu der Kronenradwellenachse 8 noch in axialer Richtung zu der Kronenradwellenachse 8. Um das Verdrehflankenspiel zwischen dem Kronenrad 6 und dem Ritzel 4 einzustellen, ist das Ritzel 4 verschiebbar.

Die Kronenradwelle 5 ist mittels einer Lagerung 10 gelagert. Die Lagerung 10 ist zwischen dem Gehäuse 2 und der Kronenradwelle 5 angeordnet. Bei der Lagerung 10 kann es sich um eine Wälzlagerung oder um eine Gleitlagerung handeln. Die Kronenradwelle 5 ragt auf beiden Seiten aus dem Gehäuse 2 heraus. Dementsprechend ist die Lagerung 10 auf einer ersten Seite 11 des Gehäuses 2 und auf einer zweiten Seite 12 des Gehäuses 2 zwischen der Kronenradwelle 5 und dem Gehäuse 2 angeordnet.

Die Ritzelwelle 3 ist in einem Flansch 13 drehbar mittels einer Lagerung 14 gelagert. Bei der Lagerung 14 kann es sich um eine Wälzlagerung oder um eine Gleitlagerung handeln. Die Lagerung 14 bestimmt, wie die Ritzelwelle 3 relativ zu dem Flansch 13 in axialer und in radialer Richtung gelagert ist. Die Ritzelwelle 3 ragt mit einem Ende über das Gehäuse 2 und den Flansch 13 hinaus. An dem anderen Ende ragt die Ritzelwelle 3 in der anderen Richtung über den Flansch 13 hinaus und in das Gehäuse 2 hinein und ist mit dem Ritzel 4 verbunden. Die Lagerung 14 ist zwischen dem Flansch 13 und einem Lagerbereich 15 der Ritzelwelle 3 angeordnet.

Der Flansch 13 ist lösbar mit dem Gehäuse 2 verbunden. Daher kann der Flansch 13 nach dem lösen der Verbindung relativ zu dem Gehäuse 2 verschoben werden. Wie in Fig. 3 gezeigt, ist der Flansch 13 mittels Zugschrauben 16 mit dem Gehäuse 2 verbunden. Dabei können die Zugschrauben 16 so ausgerichtet sein, dass die Zugschraubenachsen 17 der in das Gehäuse 2 eingeschraubten Zugschrauben 16 senkrecht zur Oberfläche des Gehäuses 2 stehen.

Die Bohrungen im Flansch 13, durch welche die Zugschrauben 16 geführt werden, können länglich sein. Dementsprechend werden die Zugschrauben 16 zum Verschieben des Flanschs 13 etwas gelockert. Der Flansch 13 wird mit den in den länglichen Bohrungen belassenen Zugschrauben 16 in die gewünschte Position verschoben. Anschließend werden die Zugschrauben 16 wieder angezogen, so dass der Flansch 13 wieder fest aber lösbar mit dem Gehäuse 2 verbunden ist. Alternativ oder zusätzlich können auch mehrere Bohrungen im Gehäuse 2 vorhanden sein, so dass der Flansch 2 verschoben werden kann, indem er mittels unterschiedlicher Bohrungen im Gehäuse 2 am Gehäuse 2 befestigt wird.

In einer alternativen Ausführung kann der Flansch 13 auch mittels Druckschrauben mit dem Gehäuse 2 verbunden werden.

Wie Fig. 3 zeigt, ist das Ritzel 4 mittels des Flanschs 13 parallel zu der Kronenradwellenachse 8 verschiebbar. Weiter ist die Ritzelwelle 3 derart mittels des Flanschs 13 gelagert, dass die Ritzelwellenachse 18 senkrecht zu der Kronenradwellenachse 8 steht.

Um zu erreichen, dass die Ritzelwellenachse 18 senkrecht zu der Kronenradwellenachse 8 steht, kann zwischen dem Gehäuse 2 und dem Flansch 13 zumindest eine parallel zur Kronenradwellenachse 8 angeordnete Längspassung angeordnet sein. Dabei kann die Längspassung eine Nut in dem Gehäuse 2, eine Nut in dem Flansch 13 und eine in den beiden Nuten angeordnete Passfeder aufweisen.

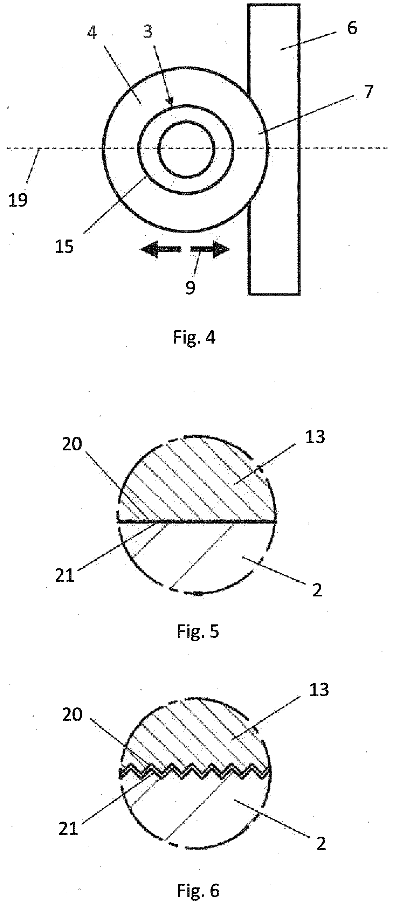

Fig. 4 zeigt eine schematische Schnittansicht entlang der Linie IV - IV aus Fig. 3. Die Blickrichtung entspricht der Richtung der mit IV gekennzeichneten Pfeile. Zu sehen ist das Ritzel 4 und das Kronenrad 6. In dem Überlagerungsbereich von Ritzel 4 und Kronenrad 6 kommt es zu dem Verzahnungseingriff 7. Dabei sind die einzelnen Zähne von Ritzel 4 und Kronenrad 6 in Fig. 4 nicht dargestellt. Weiter ist die Ritzelwelle 3 mit dem Lagerbereich 15 dargestellt. Die Pfeile 9 zeigen die Richtung, in welcher das Ritzel 4 und die Ritzelwelle 3 verschiebbar sind, um das Verdrehflankenspiel zwischen dem Kronenrad 6 und dem Ritzel 4 einzustellen. Die Verschiebungsrichtung verläuft entlang der gestrichelt dargestellten Linie 19, welche parallel zu der Kronenradwellenachse 8 verläuft.

Fig. 5 zeigt eine vergrößerte Ansicht des Bereichs V aus Fig. 3. Wie in Fig. 5 zu sehen, weist der Flansch 13 einen ebenen Auflagebereich 20 und das Gehäuse 2 einen ebenen Auflagebereich 21 auf. Dadurch, dass sowohl der Auflagebereich 20 als auch der Auflagebereich 21 eben sind, ist der Flansch 13 kraftschlüssig mit dem Gehäuse 2 verbunden, wenn der Flansch 13 mittels der Zugschraube 16 auf das Gehäuse 2 gedrückt wird.

Fig. 6 zeigt eine weitere alternative vergrößerte Ansicht des Bereichs V aus Fig. 3. Wie in Fig. 6 dargestellt, weisen der Auflagebereich 20 des Flanschs 13 und der Auflagebereich 21 des Gehäuses 2 eine Zackenform auf. Dementsprechend sind der Flansch 13 und das Gehäuse 2 über eine teilweise formschlüssige Verbindung verbunden, wenn der Flansch 13 mittels der Zugschraube 16 auf das Gehäuse 2 gedrückt wird.

Alternativ können der Auflagebereich 20 des Flanschs 13 und der Auflagebereich 21 des Gehäuses 2 eine Wellenform aufweisen. Auch in diesem Fall sind der Flansch 13 und das Gehäuse 2 über eine teilweise formschlüssige Verbindung verbunden, wenn der Flansch 13 mittels der Zugschraube 16 auf das Gehäuse 2 gedrückt wird.

## Patentansprüche

1. Kronenradgetriebe (1), mit einem Gehäuse (2), einer drehbar relativ zu dem Gehäuse (2) gelagerten Ritzelwelle (3), einem mit der Ritzelwelle (3) verbundenen Ritzel (4), einer drehbar relativ zu dem Gehäuse (2) gelagerten Kronenradwelle (5) und einem mit der Kronenradwelle (5) verbundenen Kronenrad (6), wobei das Ritzel (4) und das Kronenrad (6) miteinander im Verzahnungseingriff (7) stehen, wobei die Kronenradwelle (5) eine Kronenradwellenachse (8) aufweist
**dadurch gekennzeichnet, dass** das Kronenrad (6) und die Kronenradwelle (5) relativ zu dem Gehäuse (2) drehbar aber ortsfest angeordnet sind und das Ritzel (4) relativ zu dem Kronenrad (6) verschiebbar ist, um ein Verdrehflankenspiel zwischen dem Kronenrad (6) und dem Ritzel (4) einzustellen, wobei das Ritzel (4) parallel zu der Kronenradwellenachse (8) verschiebbar ist, wobei die Ritzelwelle (3) in einem Flansch (13) drehbar gelagert ist und der Flansch (13) verschiebbar zu dem Gehäuse (2) angeordnet ist, wobei zwischen dem Gehäuse (2) und dem Flansch (13) zumindest eine parallel zur Kronenradwellenachse (8) angeordnete Längspassung angeordnet ist, um die Ritzelwelle (3) auszurichten.

2. Kronenradgetriebe nach Anspruch 1, wobei die Ritzelwelle (3) eine Ritzelwellenachse (18) aufweist und die Ritzelwelle (3) und die Kronenradwelle (5) derart mittels des Gehäuses (2) gelagert sind, dass die Ritzelwellenachse (18) senkrecht zu der Kronenradwellenachse (8) angeordnet ist.

3. Kronenradgetriebe nach mindestens einem der Ansprüche 1 oder 2, wobei der Flansch (13) mittels Druckschrauben und/oder Zugschrauben (16) mit dem Gehäuse (2) verbunden ist.

4. Kronenradgetriebe nach mindestens einem der Ansprüche 1 bis 3, wobei ein Auflagebereich (20) des Flanschs (13) und ein Auflagebereich (21) des Gehäuses (2) so ausgebildet sind, dass der Flansch (13) und das Gehäuse (2) über eine kraftschlüssige Verbindung verbunden sind.

5. Kronenradgetriebe nach mindestens einem der Ansprüche 1 bis 3, wobei ein Auflagebereich (20) des Flanschs (13) und ein Auflagebereich (21) des Gehäuses (2) so ausgebildet sind, dass der Flansch (13) und das Gehäuse (2) über eine teilweise formschlüssige Verbindung verbunden sind.

6. Kronenradgetriebe nach Anspruch 5, wobei der Auflagebereich (20) des Flanschs (13) und/oder der Auflagebereich (21) des Gehäuses (2) eine Zackenform oder eine Wellenform aufweist.

7. Kronenradgetriebe nach mindestens einem der Ansprüche 1 bis 6, wobei die Längspassung eine Nut in dem Gehäuse (2), eine Nut in dem Flansch (13) und eine in beiden Nuten angeordnete Passfeder aufweist.

## Claims

1. Crown wheel gear (1), with a housing (2), a pinion shaft (3) mounted so as to be rotatable relative to the housing (2), a pinion (4) connected to the pinion shaft (3), a crown wheel shaft (5) mounted so as to be rotatable relative to the housing (2), and a crown wheel (6) connected to the crown wheel shaft (5), wherein the pinion (4) and the crown wheel (6) are in toothed engagement (7) with one another, wherein the crown wheel shaft (5) has a crown wheel shaft axis (8)
**characterized in that** the crown wheel (6) and the crown wheel shaft (5) are rotatable relative to the housing (2) but are fixed in position, and the pinion (4) is displaceable relative to the crown wheel (6) in order to adjust a torsional backlash between the crown wheel (6) and the pinion (4), wherein the pinion (4) is displaceable parallel to the crown wheel shaft axis (8), wherein the pinion shaft (3) is rotatably mounted in a flange (13) and the flange (13) is displaceable relative to the housing (2), wherein at least one longitudinal fit arranged parallel to the crown wheel shaft axis (8) is arranged between the housing (2) and the flange (13) in order to align the pinion shaft (3).

2. Crown wheel gear according to claim 1, wherein the pinion shaft (3) has a pinion shaft axis (18) and the pinion shaft (3) and the crown wheel shaft (5) are mounted by means of the housing (2) in such a way that the pinion shaft axis (18) is arranged perpendicular to the crown wheel shaft axis (8).

3. Crown wheel gear according to at least one of claims 1 or 2, wherein the flange (13) is connected to the housing (2) by compression screws and/or lag screws (16).

4. Crown wheel gear according to at least one of claims 1 to 3, wherein a contact area (20) of the flange (13) and a contact area (21) of the housing (2) are designed so that the flange (13) and the housing (2) are connectable via a friction-locked connection.

5. Crown wheel gear transmission according to at least one of claims 1 to 3, wherein a contact area (20) of the flange (13) and a contact area (21) of the housing (2) are designed so that the flange (13) and the housing (2) are connectable via a partially formfitting connection

6. Crown wheel gear according to claim 5, wherein the contact area (20) of the flange (13) and/or the contact area (21) of the housing (2) has a jagged shape or a wavy shape.

7. Crown wheel gear according to at least one of claims 1 to 6, wherein the longitudinal fit has a groove in the housing (2), a groove in the flange (13), and a feather key arranged in both grooves.

## Revendications

1. Engrenage à couronne dentée (1), comprenant un boîtier (2), un arbre de pignon (3) monté de manière rotative par rapport au boîtier (2), un pignon (4) relié à l'arbre de pignon (3), un arbre de couronne dentée (5) monté de manière rotative par rapport au boîtier (2) et une couronne dentée (6) reliée à l'arbre de couronne dentée (5), dans lequel le pignon (4) et la couronne dentée (6) sont en prise par engrènement (7) l'un avec l'autre et l'arbre de couronne dentée (5) présente un axe d'arbre de couronne dentée (8),
**caractérisé en ce que**
la couronne dentée (6) et l'arbre de couronne dentée (5) sont disposés de manière rotative mais fixe par rapport au boîtier (2) et le pignon (4) est coulissant par rapport à la couronne dentée (6) afin de régler un jeu primitif entre la couronne dentée (6) et le pignon (4), le pignon (4) pouvant coulisser parallèlement à l'axe d'arbre de couronne dentée (8), l'arbre de pignon (3) étant monté de manière rotative dans une bride (13) et la bride (13) étant disposée de manière à pouvoir coulisser par rapport au boîtier (2), au moins un ajustement longitudinal disposé parallèlement à l'axe d'arbre de couronne dentée (8) étant disposé entre le boîtier (2) et la bride (13) afin d'aligner l'arbre de pignon (3).

2. Engrenage à couronne dentée selon la revendication 1, dans lequel l'arbre de pignon (3) présente un axe d'arbre de pignon (18) et l'arbre de pignon (3) et l'arbre de couronne dentée (5) sont montés au moyen du boîtier (2) de telle sorte que l'axe d'arbre de pignon (18) est disposé perpendiculairement à l'axe d'arbre de couronne dentée (8).

3. Engrenage à couronne dentée selon au moins l'une des revendications 1 ou 2, dans lequel la bride (13) est reliée au boîtier (2) au moyen de vis de pression et/ou de vis de traction (16).

4. Engrenage à couronne dentée selon au moins l'une des revendications 1 à 3, dans lequel une zone d'appui (20) de la bride (13) et une zone d'appui (21) du boîtier (2) sont conçues de telle sorte que la bride (13) et le boîtier (2) sont reliés au moyen d'une liaison par friction.

5. Engrenage à couronne dentée selon au moins l'une des revendications 1 à 3, dans lequel une zone d'appui (20) de la bride (13) et une zone d'appui (21) du boîtier (2) sont conçues de telle sorte que la bride (13) et le boîtier (2) sont reliés au moyen d'une liaison partiellement par complémentarité de forme.

6. Engrenage à couronne dentée selon la revendication 5, dans lequel la zone d'appui (20) de la bride (13) et/ou la zone d'appui (21) du boîtier (2) présentent une forme dentelée ou ondulée.

7. Engrenage à couronne dentée selon au moins l'une des revendications 1 à 6, dans lequel l'ajustement longitudinal présente une rainure dans le boîtier (2), une rainure dans la bride (13) et une clavette disposée dans les deux rainures.
